Europäisches Patentamt

European Patent Office

Office européen des brevets

(19)

(11) Veröffentlichungsnummer: **0 179 356**
**B1**

(12) # EUROPÄISCHE PATENTSCHRIFT

(45) Veröffentlichungstag der Patentschrift: **14.11.90**

(51) Int. Cl.⁵: **H 02 P 7/62**

(21) Anmeldenummer: **85112812.4**

(22) Anmeldetag: **09.10.85**

(54) **Verfahren und Einrichtung zur Regelung einer Drehfeldmaschine.**

(30) Priorität: **20.10.84 DE 3438504**

(43) Veröffentlichungstag der Anmeldung:
**30.04.86 Patentblatt 86/18**

(45) Bekanntmachung des Hinweises auf die
Patenterteilung:
**14.11.90 Patentblatt 90/46**

(84) Benannte Vertragsstaaten:
**AT BE DE FR GB IT LU NL SE**

(56) Entgegenhaltungen:
EP-A-0 047 900    DE-A-2 819 789
EP-A-0 127 158    US-A-4 431 957
DE-A-2 318 602    US-A-4 477 763
REGELUNGSTECHNIK, Band 32, Nr. 1, Januar
1984, Seiten 18-26, München; R. GABRIEL
"Mikrorechnergeregelte Asynchronmaschine,
ein Antrieb für hohe dynamische
Anforderungen"
PATENT ABSTRACTS OF JAPAN, Band 4, Nr. 24
(E-173), 29. Februar 1980, Seite 63 E 173; & JP -
A - 54 162 119

(73) Patentinhaber: **Asea Brown Boveri
Aktiengesellschaft
Kallstadter Strasse 1
D-6800 Mannheim-Käfertal (DE)**

(72) Erfinder: **Depenbrock, Manfred, Prof. Dr. Dipl.-
Ing.
Lupinenweg 1
D-4630 Bochum-Stiepel (DE)**

(74) Vertreter: **Rupprecht, Klaus, Dipl.-Ing. et al
c/o Asea Brown Boveri Aktiengesellschaft
Zentralbereich Patente Postfach 100351
D-6800 Mannheim 1 (DE)**

(56) References cited:
PATENT ABSTRACTS OF JAPAN, Band 3, Nr.
143 (E-154), 27. November 1979, Seite 108 E 154;
& JP - A - 54 121 921

## Beschreibung

Die Erfindung bezieht sich auf ein Verfahren und eine Einrichtung zur Regelung einer Drehfeldmaschine gemäß dem Oberbegriff der Ansprüche 1 und 4.

Ein derartiges Verfahren une eine derartige Einrichtung sind aus der DE—AS 23 18 602 bekannt.

Zur Speisung von Drehfeldmaschinen, deren Moment sich in einem weiten Drehzahlbereich hochdynamisch auf gewünschte Werte einstellen läßt, werden meist Pulswechselrichter mit konstanter Eingangsgleichspannung eingesetzt, häufig in Verbindung mit einem feldorientierten Regelungsverfahren. Solch ein Antriebssystem genügt normalerweise auch den höchsten technischen Ansprüchen an die Regelgüte. Unter der Voraussetzung von in jeder gewünschten Weise einprägbaren Klemmenströmen können im Prinzip der Magnetfluß und das Drehmoment einer Drehfeldmaschine ständig auf gewünschte Werte eingestellt werden, allerdings nur dann, wenn alle electromagnetischen Systemparameter eines hinreichend genauen Beschreibungsmodells der Maschine bekannt sind.

Mit Hilfe eines verwickelten Signalverarbeitungssystems können dann, ausgehend von den Meßgrößen der Klemmenströme und der Drehzahl, in Abhängigkeit von einer Sollgröße, z.B. für das Drehmoment, fortlaufend die zugehörigen Klemmenspannungen bestimmt werden. Die Art und Weise dieser Signalverarbeitung ist unter anderem abhängig von der gewählten Beschreibungsform für das Antriebssystem. So gibt es Lösungen, die von der Systemdarstellung durch Zustandsgleichungen ausgehen, wie beispielsweise in R. Jötten, H. Schierling, "Control of the Induction Machine in the Field Weakening Range, Control in Power Electronics and Electrical Drives", IFAC Symposium, Lausanne, 1983, Conference Record, Seite 297 bis 304.

Andere Vorschläge basieren auf Systembeschreibungen mit Hilfe von Übertragungsfunktionen. Das Ergebnis der Signalverarbeitung, der Zeitverlauf der benötigten Klemmenspannungen, ist im Idealfall unabhängig vom gewählten Lösungsweg.

Um die Beschreibungsgleichungen zu vereinfachen und das anschauliche Verständnis aller Vorgänge zu erleichtern, ist es üblich, alle gleichartigen Größen der verschiedenen Maschinensträngen zu jeweils einem Raumzeiger zu kombinieren. Die Projektion des sich im allgemeinen zeitlich ändernden Raumzeigers auf definierte Achsen ergibt die diesen Achsen zugeordneten Zeitverläufe der entsprechenden Größen. Die Zusammenhänge zwischen den Darstellungen in verschiedenen Bezugssystemen, wie z.B. a—b—c (Ständerwicklungsachsen); α—β (orthogonale Ständerachsen); d—q (orthogonale Läuferachsen) usw. sind mit Hilfe der Raumzeigerdarstellung ebenfalls klar durchschaubar.

Leicht einzusehen ist auch die folgende Schwierigkeit der üblichen Regelungssysteme:

Bei einem normalen dreiphasigen Wechselrichter mit konstanter Eingangsgleichspannung kann der Raumzeiger der Ausgangsspannungen, der zwei linear unabhängige Komponenten hat, nur sieben diskrete Werte annehmen. Keiner dieser sieben möglichen Raumzeigerwerte stimmt im allgemeinen mit dem jeweilig gewünschten Augenblickswert des Raumzeigers überein, der sich aus den fortlaufend mit großem Aufwand bestimmten Sollwerten der Maschinenspannungen ergibt. Die angestrebte Übereinstimmung kann daher nur im Mittel über einen endlichen Zeitabschnitt erreicht werden, z.B. durch Pulsbreitenmodulation. Wenn eine sehr gute Dynamik der Regelung erforderlich ist, muß daher dann die Mittelungszeit, die Pulsspieldauer, entsprechend kurz gewählt werden.

Die fortlaufende Bestimmung der Führungswerte für die Ständerstellgrößen einer Drehfeldmaschine ist so verwickelt, daß sich auf anologer Rechentechnik basierende Lösungen aus wirtschalftlichen Gründen nicht in der Praxis durchsetzen konnten, zumal sehr hohe Anforderungen an die Genauigkeit der Rechenelemente und an die Konstanz der Schaltungskennwerte bestehen.

Durch digitale Signalverarbeitung mit Hilfe von leistungsfähigen Mikroprozessoren (siehe z.B. R. Gabriel, "Mikrorechnergeregelte Asynchronmaschine, ein Antrieb für hohe dynamische Anforderungen", Regelungstechnik 32 (1984), Seite 18 bis 26) kann der gerätetechnische Aufwand für die Signalverarbeitung so verringert werden, daß wirtschaftliche Gründe nicht mehr das Haupthindernis für eine breitere Anwendung bilden. Dennoch bestehen bei den bisherigen Lösungen Verbesserungswünsche hinsichtlich folgender Schwachpunkte:

Bei besonders hohen dynamischen Anforderungen an die Regelung der Drehfeldmaschine muß die Pulsfrequenz ebenfalls groß gemacht werden. Dies wirkt sich ungünstig auf den Wirkungsgrad und die Kosten des Wechselrichters aus.

Desweiteren besteht bei den bekannten Steuerungsverfahren eine starke Abhängigkeit der Antriebseigenschaften von sich im Betrieb ändernden Maschinenparametern, wie z.B. Läuferwiderstand, Haupt- und Streuinduktivitäten usw.

Ferner ändern sich die Steuergesetze für die Pulsbreitenmodulation im starken Maße mit den zugrundegelegten Optimierungskriterien. Diese hängen sowohl von der Antriebsaufgabe als auch von der gerätetechnischen Lösung für den Leistungsteil ab.

Die starke Parameterabhängigkeit erfordert eine ständige Bestimmung der Parameter durch zusätzliche Messungen oder zusätzliche Identifikationsrechnungen. Das Verfahren der Pulsmodulation bedingt bei hohen Forderungen hinsichtlich der Regelungsdynamik einerseits und der guten Ausnutzung von Umrichter und Maschine andererseits komplizierte und daher aufwendige mehrphasige Modulationseinrichtungen (siehe z.B. J. Eibel, R. Jötten, "Control of a 3-Level Switching Inverter Feeding a 3-Phase A.C. Machine by a Microprocessor", ETG-Fachberichte Bd. 11, Seite 217 bis 222, VDE-Verlag 1982, A. Pollmann, "A Digital Pulse Width Modulator Employing Advanced Modulation Techniques", IEEE-IAS ISPC-Conference, 1982, Orlando; G. Gierse, W. Schürmann, "Microprocessor Control for two magnetically coupled three-phase PWM Inverters", PESC 1984, Conference Record, Seite 162 bis 169).

Bei einer Realisierung in Mikrorechnertechnik wird dafür in der Regel ein eigener leistungsfähiger Mikroprozessor mit zugehörigen Peripherie-Bausteinen benötigt.

Um die sich aus der Erhöhung der Pulsfrequenz und einer optimierten Pulsbreitenmodulation ergebenden Schwierigkeiten zu vermeiden, wurden schon verschiedene Verfahren zur direkten Regelung der Maschinenströme vorgeschlagen (siehe hierzu z.B. G. Pfaff, A. Wick, "Direkte Stromregelung bei Drehstromantrieben mit Pulswechselrichter", Regelungstechnische Praxis 24 (1983), Seite 472 bis 477).

Ungelöst bleibt dabei aber das Problem der übrigen aufwendigen Signalverarbeitung, um die Führungswerte für die direkte Stromregelung zu gewinnen, und die starke Parameterabhängigkeit. Um eine bessere Ausnutzung des Wechselrichters zu erreichen, wird in der letztgenannten Literaturstelle zudem vorgeschlagen, in Verbindung mit der dynamisch guten direkten Stromregelung doch wieder ein Pulsmodulationsverfahren anzuwenden. Hinsichtlich des Aufwands dürfte sich dann allerdings keine merkliche Verringerung im Vergleich zu ausgeführten Lösungen erreichen lassen.

Aus der eingangs genannten DE—AS 23 18 602 ist eine Schaltungsanordnung zur Steuerung eines mehrphasigen Induktionsmotors bekannt, bei der durch Vergleich des Fluß-Istbetrages mit einem Soll-Betrag der Flußraumzeiger innerhalb eines durch den Soll-Betrag festgelegten Kreises bleibt und dort ein Sechseck beschreibt. Der Fluß-Istwert wird aus Klemmenspannung und Klemmenstrom ermittelt. Da jedoch nur das jeweils größte der drei Flußsignale in der Regelung verarbeitet wird, ist es möglich, daß die sechseckförmige Flußbahn erheblich vom gewünschten regulären Sechseck abweicht, besonders in dynamischen Betriebszuständen.

Aus der US—PS 44 77 763 ist ebenfalls ein Verfahren bekannt, bei dem über einen Flußregler einen von sechs regulären Vektoren und zwei Null-Vektoren ausgewählt und auf diese Weise ein näherungsweise gleichmäßiges Drehen auf einem Kreis bewirkt wird. Ziel dieses Verfahrens ist es den Flußraumzeiger auf einer möglichst kreisförmigen Bahn einem von der übergeordneten Regelung vorzugebenden Sollraumzeiger mit möglichst geringem Amplituden- und Winkelfehler nachzuführen. Eine weitere Zielsetzung ist, mit Rücksicht auf möglichst geringe Eisenverluste keine Spannungsraumzeiger zuzulassen, die die Bewegungsrichtung des Flußraumzeigers kurzzeitig umkehren. Aufgrund dieser Vorgaben sind sehr komplizierte Steuerungsschaltungen notwendig.

Aus der DE—OS 28 19 789 ist ein Verfahren zur Steuerung von Asynchronmaschinen bekannt, bei dem der steuernde Flußvektor durch eine überlagerte Fluß- und Drehmomentregelung in einem der vier Quadranten zu liegen kommt. Eine sechseckförmige Flußbahn wird nicht angestrebt. Die Pulsmodulation betrifft die beiden äußeren 60°-Abschnitte einer jeden Halbschwingung, so daß die Schaltzeiten relativ lang sind. Das beschriebene Konzept erfordert eine sehr aufwendige Signalverarbeitung.

Aus den US—A—44 31 957 und aus Patent Abstracts of Japan, Band 4, 29.2.1980, Seite 63 und JP—A—54 162 119 sind Verfahren zur Regelung einer Drehfeldmaschine bekannt, die über einen Wechselrichter gespeist wird, dessen Ausgangsspannungssystem in Amplitude, Phasenlage und Frequenz veränderbar ist, wobei aus den gemessenen Ständerströmen und Ständerspannungen ein dem Ständerfluß entsprechendes Signal gewonnen wird. Bei US—A—44 31 957 wird dieses Flußsignal einem Regler zugeführt, der den Wechselstrichter steuert. Bei der JP—A—54 162 119 wird das Flußistwertsignal in einem Vergleicher von einem Flußsollwert subtrahiert. Das gebildete Differenzsignal wird zur Regelung eines Wechselrichters herangezogen.

In der EP—A—01 27 158 sind ein Verfahren und eine Vorrichtung zur Bestimmung des Flußvektors einer Drehfeldmaschine aus Ständerstrom und Ständerspannung und deren Anwendung zum feldorientierten Betrieb einer umrichtergespeisten Drehfeldmaschine beschrieben. Ein EMK-Detektor liefert aus Spannung und Strom den EMK-Vektor im raumfesten Koordinatensystem, deren Integral der Flußvektor ist. Die Integration wird im feldorientierten Koordinatensystem durchgeführt, in dem der EMK-Vektor mittels eines Vektordrehes transformiert wird. Die Lage des Flusses wird bestimmt und der Umrichter wird in Abhängigkeit von der bestimmten Flußlage so gesteuert, daß die zum Fluß parallele Komponente und die dazu senkrechte Komponente des Ständerstromes unabhängig beeinflußbar sind.

Der Erfindung liegt die Aufgabe zugrunde, ein Verfahren und eine Einrichtung zur Regelung einer Drehfeldmaschine der eingangs genannten Art anzugeben, bei dem ein störungsfreier Übergang auch bei schnellen Änderungen des Fluß-Sollwertes möglich ist.

Diese Aufgabe wird bezüglich des Verfahrens durch die im Anspruch 1 und bezüglich der Einrichtung durch die im Anspruch 4 gekennzeichneten Merkmale gelöst.

Die mit der Erfindung erzielbaren Vorteile bestehen insbesondere darin, daß zur Signalverarbeitung weder Informationen über die Wellendrehzahl noch über andere Rotorgrößen und Rotorparameter (Induktivitäten, Widerstände) benötigt werden. Das Verfahren arbeitet ohne Pulsbreitenmodulation, ist wenig parameterempfindlich und weist sehr gute dynamische Eigenschaften auf. Die Stelleigenschaften von pulssteuerbaren Umrichtern mit konstanter Eingangsgleichspannung werden optimal genutzt.

Vorteilhafte Ausgestaltungen der Erfindung sowie Einrichtungen zur Durchführung des Verfahrens sind in den Unteransprüchen gekennzeichnet.

Die Erfindung wird nachstehend anhand der in den Zeichnungen dargestellten Ausführungsbeispiele erläutert. Es zeigen:

Fig. 1 die Raumzeiger der Ständerspannung und des Gesamtflusses sowie die Flußraumzeiger-Bahnkurven,

Fig. 2 ein Schema der Signalverarbeitung für die direkte Flußselbstregelung,

Fig. 3 ein Ersatzschaltbild für die Raumzeigergrößen einer linearen, stromverdrägungsfreien Grundwellen-Induktionsmaschine,

Fig. 4 stationäre und dynamische Ortskurven für Stromraumzeiger bei einer Induktionsmaschine mit konstantem Gesamtflußbetrag,

Fig. 5 ein Schema der Signalverarbeitung für die direkte Selbstregelung von Drehmoment und Fluß einer Drehfeldmaschine,

Fig. 6 eine Ausgestaltung zu Fig. 5,

Fig. 7, 8, 9 Zeitverläufe wichtiger Größen bei schnellen Momentänderungen einer Kurzschlußläufermaschine.

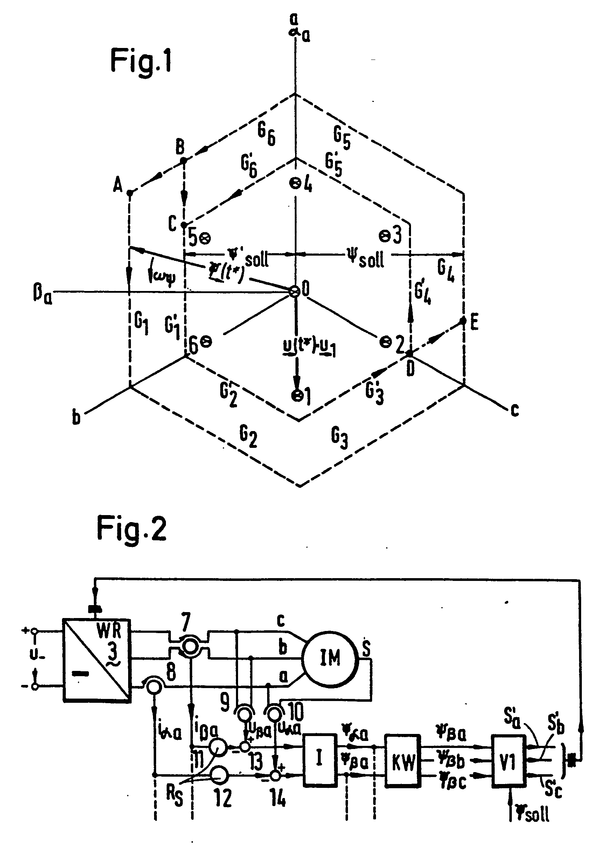

In Fig. 1 sind die Raumzeiger der Ständerspannung und des Gesamtflusses sowie die Flußraumzeiger-Bahnkurven zur Erläuterung der direkten Selbstregelung für den Fluß im Feldschwächbereich einer Drehfeldmaschine dargestellt.

Wenn eine Drehfeldmaschine über einen dreiphasigen Wechselrichter bei konstanter Eingangsgleichspannung gespeist wird, kann der Spannungsraumzeiger $\underline{u}(t)$ (Raumzeiger der Ständerspannung) nur sieben diskrete Werte annehmen. In Fig. 1 sind diese diskreten Werte durch die Punkte 0 .... 6 gekennzeichnet. Der Augenblickswert des Spannungsraumzeigers zum Punkt 1 ist mit $\underline{u}_1$ bezeichnet. In analoger Weise werden die Spannungsraumzeigerwerte zu den Punkten 0, 2, 3, 4, 5 und 6 mit $\underline{u}_0, \underline{u}_2, \underline{u}_3, \underline{u}_4, \underline{u}_5$ und $\underline{u}_6$ bezeichnet. In Fig. 1 ist der Spannungsraumzeiger $\underline{u}(t^*) = \underline{u}_1$ zum Zeitpunkt $t^*$ eingezeichnet.

Bei Grundfrequenztaktung nimmt der Spannungsraumzeiger $\underline{u}(t)$ in zyklischer Folge die durch die Punkte 1...6 bestimmten diskreten Werte an, die Verweildauer in jedem Punkt beträgt bei stationärem Betrieb ein Sechstel der Spannungsperiode. Der Zeitverlauf der drei Ständerwicklungsspannungen ergibt sich als Projektion des sich sprunghaft entgegengesetzt dem Uhrzeigersinn bewegenden Spannungsraumzeigers $\underline{u}(t)$ auf die drei ruhenden Ständerwicklungsachsen (Projektionsachsen) a—b—c. Entsprechend erhält man linear unabhängige α- und β-Komponenten des dreiphasigen Spannungssystems als Projektion auf zueinander orthogonale, ebenfalls ruhende Ständerachsen α, β, z.B. die in Bild 1 eingezeichneten $\alpha_a$- und $\beta_a$-

Achsen. Die Lage der Projektionsachsen $\alpha_a$ und $\beta_a$ ist dadurch gekennzeichnet, daß a- und $\alpha_a$-Achse zusammenfallen.

Vernachlässigt man die im Feldschwächbereich in der Regel gegenüber der Ständerspannung $|\underline{u}|$ kleine Spannung $|\underline{i}| \cdot R_s$ ($R_s$ = Ständerwicklungswiderstand, $|\underline{i}|$ = Ständerstrom), die an den Kupferwiderständen der Ständerwicklungen abfällt, so bestimmt der jeweilige Augenblickswert des Spannungsraumzeigers $\underline{u}(t)$ eindeutig die Änderung der augenblicklichen Lage des Flußraumzeigers $\underline{\psi}(t)$ (Raumzeiger für den Gesamtfluß) hinsichtlich Geschwindigkeit und Richtung. In Fig. 1 ist der Flußraumzeiger $\underline{\psi}(t^*)$ zum Zeitpunkt $t^*$ eingezeichnet.

Bei stationärer Grundfrequenztaktung durchläuft die Spitze des Flußraumzeigers deshalb, wie in Fig. 1 dargestellt, ein gleichseitiges Sechseck mit konstanter Bahngeschwindigkeit und geringfügig pulsierender Winkelgeschwindigkeit $\omega\psi$. Die Bahngeraden des Sechsecks sind mit $G_1, G_2, G_3, G_4, G_5, G_6$ bzw. mit $G_1' \ldots G_6'$ bezeichnet. Bei Grundfrequenztaktung besteht die einzige Möglichkeit zur Beeinflussung des Drehmoments der Drehfeldmaschine darin, die Zeitabstände zwischen den Umschaltungen des Spannungsraumzeigers zu steuern. Wegen der konstanten Bahngeschwindigkeit des Flußraumzeigers ergibt sich beim Durchlaufen eines großen Sechsecks mit den Bahngeraden $G_1 \ldots G_6$ eine vergleichsweise kleine mittlere Winkelgeschwindigkeit $\overline{\omega}\psi$. Bei einer Erhöhung der Schaltfrequenz erfolgt der Umlauf auf einem kleineren Sechseck mit den Bahngeraden $G_1' \ldots G_6'$ und die mittlere Winkelgeschwindigkeit $\overline{\omega}\psi$ vergrößert sich. Bei unveränderter Wellendrehzahl wird dadurch z.B. bei einer Induktionsmaschine der mittlere Schlupf und damit das Drehmoment verändert.

Um unnötige Ausgleichsvorgänge zu vermeiden, muß der dynamische Wechsel der Umlaufbahn des Flußraumzeigers so erfolgen, daß die neue Bahn genau wie die alte symmetrisch zum Ursprungspunkt des Flußraumzeigers $\underline{\psi}(t)$ verläuft. Durch die direkte Flußselbstregelung läßt sich das wesentlich einfacher als bisher erreichen. Die Einschaltung der verschiedenen Spannungsraumzeigerwerte $\underline{u}_1 \ldots \underline{u}_6$ erfolgt nach folgender Regel:

Der z.B. dem Spannungsraumzeigerwert $\underline{u}_1$ zugeordnete Schaltzustand des Wechselrichters ist genau in dem Augenblick herzustellen, in dem die Flußkomponente $\psi_{\beta a}$ (= Projektion von $\underline{\psi}(t)$ auf die $\beta_a$-Achse) den Wert erreicht, der gleich dem gewünschten Ursprungsabstand $\psi_{soll}$, d.h. dem Sollabstand der Bahngeraden $G_1$ vom Ursprung des Flußraumzeigers (= Punkt 0) ist (Führungsgröße für den Flußbetrag). Bei stationärem Umlauf auf dem großen Sechseck ist dies im Punkt A der Fall. Wird der Ursprungsabstand der Bahnkurve dagegen während der Bewegung des Flußraumzeigers $\underline{\psi}(t)$ auf der Bahngeraden $G_6$ plötzlich auf den Wert $\psi'_{soll}$ verkleinert, erfolgt die Umschaltung des Wechselrichters automatisch richtig bereits im Punkt B.

Bei weiterem stationärem Betrieb mit erhöhter

mittlerer Winkelgeschwindigkeit des Flußraumzeigers durchläuft dieser jetzt das innere Sechseck. Der Spannungsraumzeigerwert $\underline{u}_1$ wird dann jedesmal im Punkt C eingestellt. Wird schließlich der Ursprungsabstand der Bahngeraden vom Ursprung des Flußraumzeigers wieder auf den alten Sollwert $\psi_{soll}$ erhöht, z.B. beim Durchlaufen der Bahngeraden $G_3'$, erfolgt die Einschaltung des Spannungsraumzeigerwertes $\underline{u}_4$ nicht wie sonst bereits im Punkt D, sondern erst später und automatisch richtig im Punkt E, weil erst in diesem Punkt die negative Flußkomponente $(-\psi_{\beta a})$ den neuen Ursprungsabstand $\psi_{soll}$ erreicht.

Wie bereits erwähnt, ist die Lage der Projektionsachsen $\alpha_a$ und $\beta_a$ dadurch gekennzeichnet, daß a- und $\alpha_a$-Achse zusammenfallen. Entsprechend lassen sich $\alpha_b$-. $\beta_b$- und $\alpha_c$, $\beta_c$-Achsen sowie zugeordnete Flußgrößen $\psi_{\beta b}$ und $\psi_{\beta c}$ definieren. Der Vergleich aller drei Flußgrößen $\psi_{\beta a}$, $\psi_{\beta b}$ und $\psi_{\beta c}$ mit dem vorgegebenen Ursprungsabstand $\psi_{soll}$ liefert in der beschriebenen Weise die Kriterien für das selbständige Weiterschalten des Spannungsraumzeigers bei Grundfrequenztaktung.

In Fig. 2 ist hierzu eine mögliche Signalverarbeitungsstruktur für die direkte Selbstregelung des Gesamtflusses einer Drehfeldmaschine in Abhängigkeit von einer Führungsgröße für den Flußbetrag dargestellt. Der Ursprungsabstand $\psi_{soll}$ kann dabei z.B. von der Wellendrehzahl und/oder einer Drehmomentregelung abgeleitet und als Führungsgröße vorgegeben werden.

Im einzelnen ist ein dreiphasiger Wechselrichter WR gezeigt, an dem eingangsseitig eine konstante Eingangsgleichspannung U anliegt und der ausgangsseitig die den Ständerwicklungsachsen a, b, c zugeordneten Wicklungen einer Induktionsmaschine IM mit dreiphasiger Wechselspannung versorgt. Der Schaltzustand des Wechselrichters, d.h. der eingeschaltete Augenblickswert des Spannungsraumzeigers $\underline{u}$ wird durch logische Kombination der Signale $S_a'$, $S_b'$, $S_c'$ bzw. $S_a$, $S_b$, $S_c$ bestimmt (siehe hierzu z.B. W. Kuhn, Steady State Behaviour of Induction Machines fed by a Frequency Converter which is Supplied by a DC Link with an AC Component, 2. IFAC Symposium, Seite 788).

Zur Erfassung der Ständerstromkomponente $i_{\beta a}$ (= Projektion des Ständerstromraumzeigers $\underline{i}$ auf die $\beta_a$-Achse) dient ein Stromwandler 7 (Differenzstromwandler), durch den die Ströme der den Ständerwicklungsachsen b und c zugeordneten Wicklungen fließen. Der durch die Wicklung der Ständerwicklungsachse a fließende Strom, d.h. die Ständerstromkomponente $i_{\alpha a}$ (= Projektion des Ständerstromraumzeigers auf die $\alpha_a$-Achse) wird durch einen Stromwandler 8 erfaßt. Diese unmittelbare Erfassung von $i_{\alpha a}$ und $i_{\beta a}$ ist eine Abwandlung der allgemein bekannten 120°/90°-Transformation der Ströme.

Die Ständerspannungskomponente $u_{\beta a}$ (= Projektion des Spannungsraumzeigers $\underline{u}(t)$ auf die $\beta_a$-Achse) wird durch einen Spannungswandler 9 ermittelt, dessen Klemmen mit den zu den Ständerwicklungsachsen b und c zugehörigen Wicklungen verbunden sind. Zur Erfassung der Ständerspannungskomponente $u_{\alpha a}$ (= Projektion des Spannungsraumzeigers $\underline{u}(t)$ auf die $\alpha_a$-Achse) dient ein Spannungswandler 10, dessen Klemmen mit der zur Ständerwicklungsachse a gehörigen Wicklung sowie mit dem Sternpunkt S der Maschine IM verbunden ist.

Die Ständerstromkomponenten $i_{\beta a}$ bzw. $i_{\alpha a}$ werden mit Hilfe von Multiplizieren 11 bzw. 12 mit dem Ständerwicklungswiderstand $R_s$ multipliziert und die Produkte werden mit negativen Vorzeichen Vergleichsstellen 13 bzw. 14 zugeleitet. Diesen Vergleichsstellen 13 bzw. 14 liegen mit positiven Vorzeichen die Ständerspannungskomponenten $u_{\beta a}$ bzw. $u_{\alpha a}$ an. Die Differenzsignale $u_{\beta a} - i_{\beta a} \cdot R_s$ bzw. $u_{\alpha a} - i_{\alpha a} \cdot R_s$ der Vergleichsstellen 13 bzw. 14 werden einem Integrator I zugeführt.

Der Integrator I bildet hieraus die Flußkomponenten $\psi_{\beta a}$ und $\psi_{\alpha a}$ und leitet diese einem Komponentenwandler KW zu. Der Komponentenwandler KW ermittelt hieraus die Flußkomponenten $\psi_{\beta a}$, $\psi_{\beta b}$ und $\psi_{\beta c}$ und führt diese einem Vergleicher V1 zu. Der Vergleicher V1 liefert Schaltzustandsvariable Sa', Sb', Sc' an den Wechselrichter WR in Abhängigkeit des Vergleichs zwischen $\psi_{\beta a}$, $\psi_{\beta b}$, $\psi_{\beta c}$ und dem Ursprungsabstand $\psi_{soll}$ (= Führungsgröße für den Flußbetrag). Die Schaltzustandsvariable $S_a'$, $S_b'$, $S_c'$ geben die einzelnen Spannungsraumanzeigerwerte $\underline{U}_0 \ldots \underline{U}_6$ gemäß folgender Tabelle vor:

| $S_a'$ | $S_b'$ | $S_c'$ | |
|--------|--------|--------|--------|
| H | L | L | $\underline{U}_1$ |
| H | H | L | $\underline{U}_2$ |
| L | H | L | $\underline{U}_3$ |
| L | H | H | $\underline{U}_4$ |
| L | L | H | $\underline{U}_5$ |
| H | L | H | $\underline{U}_6$ |
| H | H | H | $\underline{U}_0$ |
| L | L | L | $\underline{U}_0$ |

(L = Low, H = High)

Die vorstehend beschriebene direkte Flußselbstregelung ermöglicht bei Grundfrequenztaktung die schnellstmögliche Änderung des Gesamtflußbetrages $|\psi|$ ohne unnötige Ausgleichsvorgänge. Es werden weder Informationen über die Drehzahl noch über andere Rotorgrößen und Rotorparameter benötigt. Die in der Regel nichtlinearen Zusammenhänge zwischen Strömen und Flüssen haben praktisch keinerlei Einfluß auf stationäre und dynamische Abläufe, genauso wie Änderungen der Eingangsgleichspannung $U_-$ des Wechselrichters, Allein der Widerstand $R_s$ der Ständerwicklungen geht als Parameter in die Signalverarbeitung mit geringfügigem Einfluß ein. Wenn nötig, können die betrieblichen Änderungen dieses Parameters z.B. über eine Temperaturgesteuerte Adaption leicht berücksichtigt werden.

Nachfolgend wird das Prinzip der direkten Selbstregelung für das Drehmoment einer Drehfeldmaschine beispielhaft· für die Kurzschlußläufervariante der Induktionsmaschine erklärt. Es läßt sich in analoger Weise für Synchronmaschinen anwenden, gleichgültig, ob mit Vollpol- oder Schenkelpolläufer, ob mit Stromerregung oder Dauermagneterregung oder ob Ausführungen mit oder ohne Dämpferwicklung betrachet werden.

Es ist normalerweise nicht sinnvoll, den Betrag des resultierenden Magnetflusses einer Drefeldmaschine über seinen Nenn- oder Bemessungswert hinaus zu erhöhen. Wegen der konstanten Bahngeschwindigkeit des Flußraumzeigers kann deshalb bei Grundfrequenztaktung mit nur sechs diskreten Werden des Spannungsraumzeigers eine dem vollen Bemessungsfluß zugeordnete mittlere Winkelgeschwindigkeit des Flußraumzeigers nicht unterschritten werden. Bei konstanter Bahnkurve des Flußraumzeigers läßt sich seine mittlere Winkelgeschwindigkeit dann nur durch Herabsetzen der mittleren Bahngeschwindigkeit vermindern.

Vernachlässigt man die stromproportionalen Spannungen am Kupferwiderstand der Ständerwicklungen, kann bei einem dreiphasigen Wechselrichter mit konstanter Eingangsgleichspannung die Bahngeschwindigkeit sehr einfach auf den Wert Null verringert werden, nämlich durch Einschaltung des siebten Spannungsraumzeigerwertes $\underline{u}_0$, dessen Betrag den Wert 0 hat.

Über eine Pulsspiel, bestehend aus einem ersten Teilintervall mit unverminderter Bahngeschwindigkeit des Flußraumzeigers und einem zweiten Teilintervall mit gegenüber den Ständerachsen stillstehendem Flußraumzeiger, kann durch die Wahl der Dauer beider Teilintervalle jeder beliebige Zwischenwert, der über das Pulsspiel gemittelten Bahngeschwindigkeit eingestellt werden.

Zur einfacheren Beschreibung kann die sechseckförmige Bahnkurve des Flußraumzeigers durch einen Kreis angenähert werden. Das wesentliche der dynamischen Vorgänge beim Umschalten von einem der sechs äußeren Spannungsraumzeiger auf den zentralen siebten Spannungsraumzeiger und umgekehrt ist dann wie folgt:

Im Teilintervall mit voller Maschinenspannung besitzt die Winkelgeschwindigkeit des räumlich rotierenden Teils der resultierenden Flußverkettung gegenüber dem Ständer den der Grunddrehzahl zugeordneten Wert $\omega_0$. Bei konstanter Wellenrotation im mittleren Bereich zwischen Grunddrehzahl und Stillstand hat der Schlupf des Rotors dann einen sehr großen positiven Wert, z.B.

$s = +0{,}5$ bei halber Grunddrehzahl. Wird die Flußrotation gegenüber dem Ständer dadurch angehalten, daß alle Ständerspannungen zu Null gemacht werden, kehrt sich bei ungeänderter Wellenrotation die Richtung der Flußrotation gegenüber dem Rotor um, der Schlupf nimmt sehr große negative Werte an, z.B. $s = -0{,}5$ bei halber Grunddrehzahl.

Ausgehend von einem beliebigen Aufangszustand innerhalb des normalen Betriebsbereiches erkennt man auf einfache Weise die Dynamik aller wichtigen Größen, wenn der Schlupfbetrag sprungartig auf einem im Vergleich zum Kippschlupf $s_K$ großen Wert erhöht und der Übergang in den zugeordneten stationären Zustand betrachtet wird. Das Wesentliche aller Vorgänge ist auch noch hinreichend klar erkennbar, wenn folgende weitere idealisierende Annahmen getroffen werden:

1. Die Induktionsmaschine wird durch ein lineares, stromverdrängungsfreies Grundwellenmodell hinreichend genau beschreiben.

2. Durch entsprechende Steuerung der Ständerspannungen wird der Betrag der resultierenden Flußverkettung konstant gehalten und allein die Rotationsgeschwindigkeit des zugeordneten Raumzeigers sprunghaft geändert.

3. Die Wellendrehzahl blieb während der Betrachtungszeit unverändert.

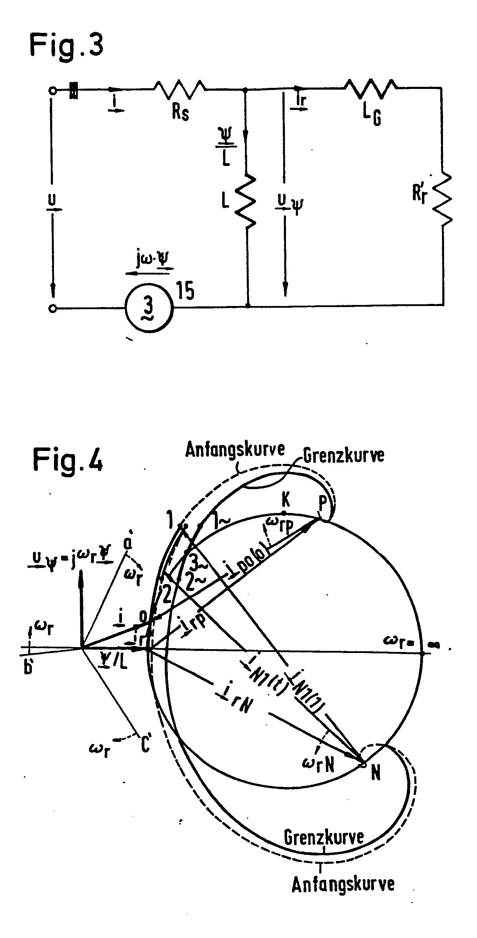

Aufgrund dieser drei Annahmen können alle Vorgänge anhand des in Fig. 3 dargestellten Raumzeiger-Ersatzschaltbildes für einen Beobachter richtig beschrieben werden, der gegenüber dem Rotor ruht (Bezugssystem mit Rotor umlaufend). Im Gegensatz zu dem allgemein bekannten T-Ersatzschaltbild sind beim Ersatzschaltbild gemäß Fig. 3 die rotatorische Spannung auf die Ständerseite und die Streuung auf die Rotorseite verlagert. An die erste Klemme des Ersatzschaltbildes ist der Ständerwicklungswiderstand $R_s$ angeschlossen. Der über den Ständerwicklungswiderstand $R_s$ fließende Strom wird durch den Ständerstromraumzeiger $\underline{i}$ beschrieben. Mit dem Ständerwicklungswiderstand $R_s$ sind andererseits die Drehfeldinduktivität $L$ und die Streufeldinduktivität $L_6$ verbunden. Der über die Drehfeldinduktivität $L$ fließende Magnetisierungsstrom wird durch den Raumzeiger $\underline{\psi}/L$ beschrieben. Die vom Flußraumzeiger $\underline{\psi}$ induzierte Spannung an der Drehfeldinduktivität $L$ beträgt $\underline{U}\psi$.

Der über die Streufeldinduktivität $L_6$ fließende Strom wird durch den Rotorstromraumzeiger $\underline{i}_r$ beschrieben. Die Streufeldinduktivität $L_6$ ist andererseits über den Rotorwiderstand $R_r{'}$ mit der weiteren Klemme der Drehfeldinduktivität $L$ und mit einer Drehspannungsquelle 15 (rotatorische Spannung) verbunden. Der Spannungsraumzeiger der Drehspannungsquelle 15 beträgt $j\omega\underline{\psi}$, wobei $\omega$ die Winkelgeschwindigkeit zwischen Rotor under Ständer bei $p = 1$ ($p =$ Polpaarzahl) beträgt. Die weitere Klemme der Drehspannungsquelle 15 bildet die zweite Klemme des Ersatzschaltbildes. Zwischen beiden Klemmen des Ersatzschaltbildes liegt der Spannungsraumzeiger $\underline{u}$ an.

Alle Elemente der Ersatzschaltung lassen sich aus jedem Satz von vier Parametern eindeutig berechnen, durch den eine der Voraussetzung 1 entsprechende Grundwellenmaschine restlos bestimmt ist. Die vier passiven Elemente $R_s$, $R_r'$, $L$, $L_6$ des Ersatzschaltbildes beschreiben ihrerseits das Verhalten der zugeordneten Grundwellenmaschine eindeutig und vollständig. Unter den angeführten Voraussetzungen kann die Rotorkreisfrequenz $\omega_r$ als die einzige unabhängig veränderbare Größe des durch Fig. 3 festgelegten Systems gewählt werden. Für die vom Gesamtfluß $\psi$ induzierte Spannung gilt dann:

$$\underline{u}_\psi = d\underline{\psi}/dt = d(\underline{\hat{\psi}} \cdot e^{j\omega_r t})/dt = j\omega_r \cdot \underline{\psi} \tag{1}$$

Im eingeschwungenen Betrieb mit konstanter Rotorfrequenz ergibt sich der Rotorstrom $\underline{i}_r$ aus der Spannung $\underline{u}_\psi$ und dem Wechselstromleitwert der Reihenschaltung von $L_6$ und $R_r'$. Bei Variation der Rotorkreisfrequenz erhält man den in Fig. 4 dargestellten Kreis als Ortskurve für die von $\omega_r$ abhängigen Stromraumzeiger $\underline{i}$ und $\underline{i}_r$. Dieser Kreis behält seine Lage in der komplexen Darstellungsebene unverändert, wenn die drei Projektionsachsen a', b', c' mit der Winkelgeschwindigkeit $\omega_r$ im Uhrzeigersinn in dieser Ebene rotieren.

Alle Stranggrößen ergeben sich dann richtig in ihrem Zeitverlauf als Projektionen der zugeordneten Raumzeiger auf diese rotierenden Achsen. Bei positivem $\omega_r$ ergeben sich ausschließlich Punkte auf dem im ersten Quadranten liegenden Teil der Stromortskurve, bei negativem $\omega_r$ kehrt sich die Phasenfolge der Rotorstranggrößen um, bei jetzt umgekehrtem Rotationssinn der Projektionsachsen ergeben sich für die der Spannung $\underline{u}_\psi$ nach wie vor nacheilenden Rotorstromraumzeiger ausschließlich Punkte im vierten Quadranten auf der unteren Hälfte des Ortskurvenkreises.

Die Raumzeiger für den Gesamtfluß $\psi$ und den Magnetisierungsstrom $\psi/L$ bleiben in der gewählten Darstellung unverändert. Lediglich die zur Richtung dieser Raumzeiger senkrecht liegende Komponente des Rotor- oder Ständerstromraumzeigers bildet mit dem rotierenden Anteil des Gesamtflusses ein Drehmoment. Diese Komponente des Stromraumzeigers ist daher direkt ein Maß für das Drehmoment.

Auf dem oberen Halbkreis der Stromortskurve ergeben sich daher ausschließlich positive Werte des Drehmomentes, auf dem unteren Halbkreis sind negative, im Uhrzeigersinn wirkende Momente zugeordnet. Ob motorischer oder generatorischer Betrieb vorliegt, ergibt sich bei Berücksichtigung des Vorzeichens von $\omega$, d.h. in Abhängigkeit vom Drehsinn der Welle.

Nur im stationären Betrieb mit konstantem Betrag $|\psi|$ der resultierenden Flußverkettung und konstanter Rotorkreisfrequenz $\omega_r$ liegen die Raumzeiger von Stator- und Rotorstrom auf der in Fig. 4 dargestellten Kreisortskurve. Jeder andere Punkt der Stromraumzeigerebene entspricht Werten der beiden linear unabhängigen Zustandsgrößen der drei Rotorströme, die im Prinzip unter dynamischen Betriebsbedingungen ebenfalls möglich sind. Nimmt man einen Zeitverlauf der Spannung $\underline{u}_\psi$ gemäß Gleichung (1) mit einem Wert $\omega_{rp}$ der Rotorfrequenz, der bei stationärem Betrieb die durch den Punkt P auf der Stromortskurve bestimmten Rotorströme zur Folge hat, so kann der Übergang in dem zugeordneten periodischen Betriebszustand aus einem beliebigen Anfangszustand bei t = 0 leicht beschrieben werden. Der Anfangszustand für t = 0 ist in Fig. 4 durch den Punkt 0 gekennzeichnet. In diesem Zeitpunkt wird die Differenz zwischen den augenblicklichen Rotorströmen und den Rotorströmen, die bei stationären Verhältnissen in diesem Zeitpunkt fließen würden, durch den Raumzeiger $\underline{i}_{P0}(0)$ dargestellt. Die Projektionen dieses Zeigers auf die rotierenden Achsen a', b', c' im Zeitpunkt t = 0 ergeben die Anfangswerte der dynamischen Rotorstromausgleichsglieder, die alle drei mit der gleichen Zeitkonstanten $L_6/R_r'$ in der Folgezeit bis auf Null abklingen.

Relativ zu den rotierenden Achsen betrachtet, behält der Raumzeiger $\underline{i}_{P0}(t)$ seine Richtung bei, da sich alle drei Ausgleichsströme so gleichmäßig ändern, daß ihre Verhältnisse gleich bleiben. Nur der Betrag $|\underline{i}_{P0}(t)|$ verringert sich mit der Zeitkonstanten $L_6 R_r'$. Verfolgt man den Zeitverlauf des Ausgleichsraumzeigers $\underline{i}_{P0}(t)$ relativ zum in Fig. 4 ruhenden Ortskurvenkreis, so erhält man einen mit der konstanten Winkelgeschwindigkeit $\omega_{rp}$ im Uhrzeigersinn rotierenden Zeiger, dessen Betrag nach einer Exponentialfunktion mit der Zeitkonstanten $L_6/R_r'$ gegen 0 geht. Die Bahnkurve des Ausgleichszeigers $\underline{i}_{P0}(t)$ ist daher eine Spirale, deren Konvergenzzentrum im Punkt P liegt.

Wie man aus Fig. 4 sieht, wächst nach t = 0 die zu $\psi$ senkrechte Komponente von $\underline{i}_r(t)$, und damit das Drehmoment der Maschine, sehr schnell an. Wird beim Erreichen des Punktes 1 auf der Ausgleichskurve die Ständerspannung so geändert, daß die Rotorkreisfrequenz den großen negativen Wert $\omega_{rN}$ annimmt, ist dieser neuen Rotorkreisfrequenz der stationäre Punkt N auf dem Ortskurvenkreis zugeordnet. Dieser Punkt ist jetzt der Konvergenzpunkt des neuen Ausgleichsraumzeigers $\underline{i}_{N1}(t)$, dessen Betrag ebenfalls exponential mit der Zeitkonstanten $L_6/R_r'$ abnimmt, der aber entgegengesetzt zum Uhrzeigersinn mit der Winkelgeschwindigkeit $\omega_{rN}$ rotiert, weil nun auch die Projektionsachsen a', b', c' in diesem Sinn rotieren. Wie direkt ersichtlich, nimmt jetzt das Drehmoment der Maschine sehr schnell ab. Wird im Punkt 2 der neuen Ausgleichsspirale die Rotorkreisfrequenz wieder gleich $\omega_{rp}$ gemacht, wiederholen sich die zuerst geschilderten Vorgänge bei insgesamt etwas größeren Werten der in Richtung von $\psi$ liegenden Komponente des Rotorstromraumzeigers $\underline{i}_r$.

Wird das Verfahren der Umschaltung zwischen den Rotorkreisfrequenzen $\omega_{rp}$ und $\omega_{rN}$ in der beschriebenen Weise jedesmal beim Erreichen des gleichen oberen bzw. unteren Momentenwertes fortgesetzt, so ergibt sich ein stationärer Grenzzyklus mit den in Fig. 4 eingezeichneten Grenzfällen der Ausgleichsortskurven. Anfangs- und Endpunkte der zyklisch durchlaufenen Abschnitte beider Ausgleichsspiralen fallen zusammen, in Fig. 4 mit 1~ und 2~ bezeichnet. Die dazwischen liegenden Teilabschnitte der beiden Ausgleichsortskurven liegen so dicht beiander, daß in Fig. 4 kein Unterschied erkennbar ist. Der Punkt 3~ ist den Grundschwingungenen der drei Rotorströme zugeordnet, er liegt auf der Kreisortskurve.

Sind die Beträge der Rotorkreisfrequenzen $\omega_{rp}$ und $\omega_{rN}$ groß gegenüber der Rotorkreisfrequenz $\omega_{rK}$ im stationären Kippunkt K für konstanten Gesamtfluß, so hängt die Änderungsgeschwindigkeit der zu $\underline{\psi}$ senkrecht gerichteten Komponenten des Rotorstromraumzeigers praktisch nicht vom Rotorwiderstand $R_r'$ ab, sondern nur vom Verhältnis $\underline{\psi}/L_6$. Das bedeutet, daß der betrieblich in weiten Grenzen veränderliche Parameter $R_r'$ auf die Dynamik bei schnellen Änderungen des Drehmomentes keinen merklichen Einfluß hat.

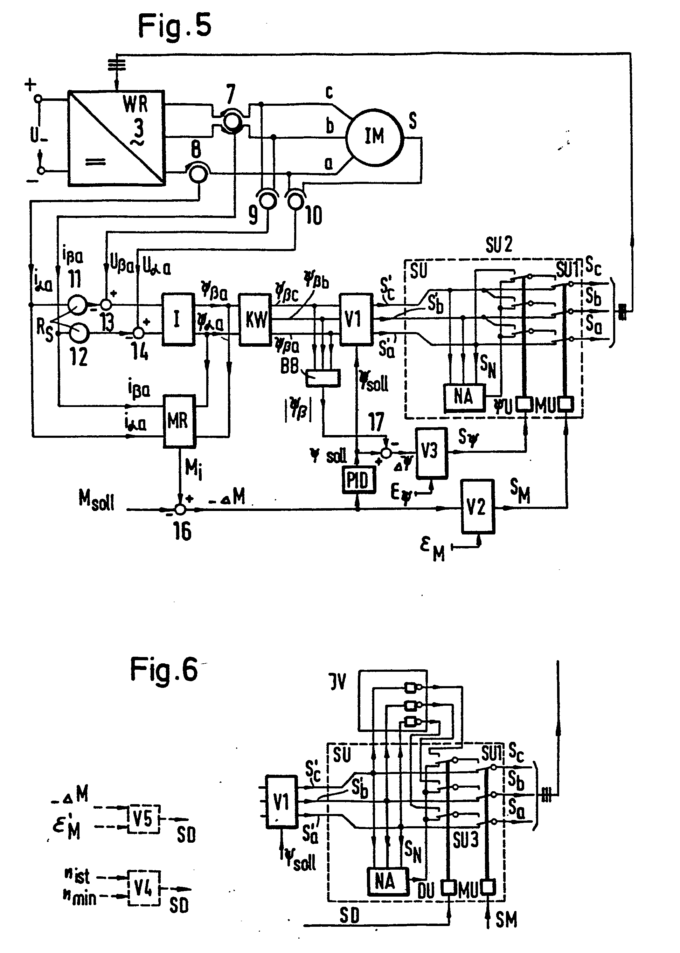

Aufgrund der vorstehend geschilderten Vorgänge bei sprunghafter Änderung der Flußwinkelgeschwindigkeit kann eine sehr einfache, direkte Selbstregelung des Drehmomentes mit ausgezeichneter Dynamik verwirklicht werden. In Fig. 5 ist hierzu ein Schema der Signalverarbeitung für die direkte Selbstregelung von Drehmoment und Fluß einer Drehfeldmaschine dargestellt.

Die aus den Einheiten WR, IM, I, KW, V1, 7 bis 14 bestehende Schaltungsanordnung ist wie unter Fig. 2 beschrieben aufgebaut. Zusätzlich werden die Ständerstromkomponenten $i_{\alpha a}$, $i_{\beta a}$ und die Flußkomponenten $\psi_{\beta a}$, $\psi_{\alpha a}$ einem Momentrechner MR zugeführt, der den Istwert des inneren Drehmomentes $M_I$ aus dem Verlauf der Ständerströme und der resultierenden Flußverkettungen bildet.

Das innere Drehmoment einer Drehfeldmaschine läßt sich dabei nach folgender Beziehung berechnen:

$$M_I = 1{,}5 \, (\psi_{\alpha a} \cdot i_{\beta a} - \psi_{\beta a} \cdot i_{\alpha a}) \qquad (2)$$

Bei der in Fig. 5 dargestellten erweiterten Signalverarbeitungsstruktur wird diese im Momentrechner MR gebildete Größe in einer Vergleichsstelle 16 mit dem vorzugebenden Drehmoment-Sollwert $M_{soll}$ verglichen. Im Grunddrehzahlbereich ergibt sich dann eine einfache Regelung nach folgender Vorschrift:

Übersteigt der Istwert des inneren Momentes $M_I$ den Sollwert $M_{soll}$ um mehr als einen zugelassenen Toleranzwert $\varepsilon_M$, so ist anstelle des durch die Flußselbstregelung aus den sechs äußeren Raumzeigerwerten der Maschinenspannung bestimmten aktuellen Raumzeigerwertes ($S_a = S_a'$, $S_b = S_b'$, $S_c = S_c'$) der siebte Raumzeigerwert mit dem Betrag Null so lange einzuschalten ($S_a = S_b = S_c = S_N$), bis der Istwert des Momentes den Sollwert um mehr als $\varepsilon_M$ unterschreitet. Danach bestimmt wieder die Flußselbstregelung den Schaltzustand des Wechselrichters.

Bei der Strukturdarstellung in Fig. 5 wird die Regelabweichung $\Delta_M = M_{soll} - M_I$ in einem Dreh-

moment-Vergleicher V2 mit dem Toleranzwert $\varepsilon_M$ verglichen und die Änderungen der Schaltzustände werden durch die vom Vergleicher V2 abgegebene Schaltvariable $S_M$ über die symbolisch dargestellte momentabhängige Umschalteinrichtung MU bewirkt, indem der Schalter SU1 des Signalumschalters SU entweder die Schaltzustandsvariablen $S_a'$, $S_b'$, $S_c'$ (zur Bildung der Spannungsraumzeigerwerte $\underline{U}_1 \ldots \underline{U}_6$) oder die Schaltzustandsvariable $S_N$ (zur Bildung des Spannungsraumzeigerwertes $\underline{U}_0$) durchschaltet.

Der siebte Spannungsraumzeigerwert $\underline{U}_0$ mit dem Betrag 0 kann durch zwei verschiedene Schaltzustände verwirklicht werden. Durch entsprechende Auswahlkriterien lassen sich Nebenbedingungen erfüllen, wie z.B. minimale Schalthäufigkeit, Gewährleistung von Schaltzustand-Minimalzeiten usw. In Fig. 5 dient dazu die Nullzustandsauswahl NA.

Die von der Nullzustandsauswahl NA abgegebene Schaltzustansvariable $S_N$ weist in Abhängigkeit der Schaltzustandsvariablen $S_a'$, $S_b'$, $S_c'$ folgende Werte auf:

| $S_a'$ | $S_b'$ | $S_c'$ | | $S_N$ |
|--------|--------|--------|------------|-------|
| H | L | L | $\underline{U}_1$ | L |
| H | H | L | $\underline{U}_2$ | H |
| L | H | L | $\underline{U}_3$ | L |
| L | H | H | $\underline{U}_4$ | H |
| L | L | H | $\underline{U}_5$ | L |
| H | L | H | $\underline{U}_6$ | H |
| H | H | H | $\underline{U}_0$ | H |
| L | L | L | $\underline{U}_0$ | L |

(L = Low, H = High)

Auf die beschriebene Weise stellt sich die über ein Pulsspiel gemittelte Winkelgeschwindigkeit des rotierenden Anteils der resultierenden Flußverkettung selbständig auf den zur Erzeugung des gewünschten Drehmomentes erforderlichen Wert ein, und zwar ohne jede Information über die Wellendrehzahl und über aktuelle Werte von Induktivitäten Rotorwiderstand sowie über andere Größen und Parameter, die bei herkömmlichen Regelungsverfahren bekannt sein müssen. Die in der Regel immer vorhandenen langsamen und schnellen Schwankungen der Eingangsgleichspannung $U_-$ des Wechselrichters werden durch die direkte Selbstregelung automatisch voll berücksichtigt und bleiben so ohne Auswirkung auf das in einem $2\,\varepsilon_M$-breiten Toleranzband geführte Drehmoment.

Bei kleinen Drehzahlen, z.B. im Bereich unterhalb von 30% der Grunddrehzahl, kann die Dynamik bei durch Sprüngen des Momentsollwertes verursachten großen negativen Werten der Regel-

abweichung $\Delta_M$ weiter verbessert werden. In diesem Fall wird über den Drehmomentvergleicher V2 anstelle des Spannungsraumzeigers $\underline{U}_0$ mit dem Betrag Null derjenige Raumzeigerwert $\underline{U}_1 \ldots \underline{U}_6$ mit Hilfe der Schaltzustansvariablen $\overline{S}_a, \overline{S}_b, \overline{S}_c$ eingeschaltet, der bis auf das Vorzeichen mit dem von der Flußselbstregelung ausgewählten Wert des Spannungsraumzeigers übereinstimmt.

In Fig. 6 ist eine Ausführungsbeispiel hierzu dargestellt. Dem Umschalter SU1 des Signalumschalters SU ist ein Umschalter SU3 vorgeschalet der entweder die Schaltzustandsvariable $S_N$ oder die inversen Schaltzustandsvariablen $S_a'$, $S_b'$, $S_c'$ durchschaltet. Zur Bildung der inversen Variablen $S_a'$, $S_b'$, $S_c'$ ist ein Inverter IV vorgesehen. Der Umschalter SU3 wird von einer drehzahlabhängigen Umschalteinrichtung DV angesteuert. Zur Erfassung von kleinen Drehzahlen (z.B. unterhalb von 30% der Grunddrehzahl) dient ein Vergleicher V4, der eine Schaltvariable SD an die Umschalteinrichtung DU abgibt, wenn eine kleine Drehzahl vorliegt ($n_{ist}$ = Wellendrehzahl-Istwert, $n_{min}$ = Grenzwert für kleine Drehzahlen, z.B. 30% der Grunddrehzahl). Alternativ hierzu kann die Schaltvariable SD auch durch einen Vergleicher V5 gebildet werden, die eingangsseitig die Regelabweichung $\Delta M$ une ein Toleranzwert $\varepsilon_M'$ zugeführt werden, wobei $\varepsilon_M' > \varepsilon_M$. Diese Variante hat den Vorteil, daß die Drehzahl nicht erfaßt werden muß.

Bei Vorgabe der inversen Schaltzustandsvariablen bleibt der Gesamtflußraumzeiger nicht nur stehen, sondern er bewegt sich auf der gerade durchlaufenen Bahnkurve mit voller Geschwindigkeit in zur bisherigen umgekehrter Richtung. Auf diese Weise können z.B. auch bei sehr kleiner positiver Winkelgeschwindigkeit der Welle große negative Werte der Rotorfrequenz $\omega_r$ erreicht werden, die nötig sind, wenn das Drehmoment schnell verkleinert werden soll.

In stationären Betriebspunkten schwingt der Istwert des Drehmomentes sägezahnförmig um den gewünschten Sollwert mit der Amplitude $\varepsilon_M$. Die Dauer eines Pulsspiel ist der Schwingungsbreite $2 \varepsilon_M$ angenähert proportional. Die Proportionalitätskonstante hängt in erster Linie von der Drehzahl ab. Etwa bei der halben Grunddrehzahl ergibt sich der größte Wert. Im Bereich dieser Drehzahl gibt es daher einen Grenzwert für die Größe $\varepsilon_M$, der mit Rücksicht auf die höchste zulässige Pulsfrequenz des verwendeten Wechselrichters nicht unterschritten werden darf. Die zugeordnete Momentpulsation ist durch die Eigenschaften des Wechselrichters bedingt und kann, wie bei der direkten Selbstregelung der Fall, bestenfalls im geregelten Betrieb erreicht, aber niemals unterschritten werden.

In den durch die Flußselbstregelung bestimmten Zeitpunkten, in denen erstmals auf einen neuen äußeren Wert des Spannungsraumzeigers umgeschaltet wird, liegt der Flußraumzeiger genau auf einer in Fig. 1 durch den Ursprungsabstand $\psi_{soll}$ definierten Sollgeraden der Flußbahnkurve. Innerhalb der Zeit bis zum Wechsel auf den nächsten Bahnkurvenabschnitt folgt der Flußraumzeiger jedoch nicht exakt der Sollgeraden. Ursache ist die Spannung $\underline{i} \cdot R_s$, die an den Ständerwicklungswiderständen auftritt. Der Betrag des Flußraumzeigers verringert sich beim Durchlaufen des wahren Bahnkurvenabschnitts im Vergleich zu den Werten, die sich auf der zugeordneten idealen Bahngeraden ergeben würden. Die Abweichung wächst mit der Zeit, die bis zum Erreichen des nächsten neuen Bahnabschnitts vergeht, d.h. bei konstantem Sollwert $\psi_{soll}$ sinkt der Mittelwert des Flußbetrages mit der Ständerfrequenz.

Das erreichbare Kippmoment hängt quadratisch vom Flußbetrag ab. Wenn das volle Kippmoment verlangt wird, reicht es bei sehr kleinen Ständerfrequenzen nicht mehr, nur sechsmal pro Periode den Flußbetrag auf den richtigen Wert zu bringen. Nachfolgend wird deshalb die direkte Selbstregelung für den Flußbetrag bei niedrigen Ständerfrequenzen behandelt.

Die Ausgangsspannungen eines dreiphasigen Wechselrichters stellen ein System von zwei unabhängigen Stellgrößen dar. Im Idealfall könnte man damit zwei Größen einer Induktionsmaschine, vorgegebenen Sollverläufen, innerhalb der durch die Stellgrößenbeschränkungen bedingten Grenzen, fehlerfrei nachführen.

Bei den bekannten feldorientierten Regelungsverfahren werden z.B. Sollverläufe für den Rotorflußbetrag und das Drehmoment vorgegeben, die Ständerströme müssen dann so wie sie sich zwangsläufig ergeben, akzeptiert und im Idealfall genau in dieser Form mit Hilfe der Wechselrichterspannungen der Maschine eingeprägt werden.

Beim bisher beschriebenen Verfahren der direkten Selbstregelung würde im Idealfall ($\varepsilon_M \to 0$) ebenfalls ein gewünschter Verlauf des Drehmoments und einer Flußgröße fehlerfrei erreicht werden können. Bei der Flußgröße handelt es sich um die durch die Selbststeuerung festgelegte Art der Flußraumzeigerbahnkurvenabschnitte mit dem in seinem Zeitverlauf frei vorgebbaren Parameter $\psi_{soll}$. Da nur zwei unabhängige Stellgrößen zur Verfügung stehen, können bei $\varepsilon_M \to 0$ weitere Forderungen, die durch Vorgabe von $\psi_{soll}(t)$ nicht erfüllbar sind, auch nicht zugelassen werden.

Die reale Zweipunktregelung des Drehmoments mit $\varepsilon_M > 0$ ist nun dadurch gekennzeichnet, daß immer dann, wenn der Istwert des Momentes innerhalb des Toleranzbandes mit der endlichen Breite $2 \varepsilon_M$ verläuft, der Stellgrößenzustand nicht geändert werden muß, aber geändert werden kann. In einer Art Zeitmultiplexverfahren ist es deshalb praktisch möglich, eine weitere, dritte Größe einem im Prinzip frei vorgebbaren Sollwert mit einem tolerierten Fehler nachzuführen. Durch die zusätzliche Zweipunktregelung einer durch einen Betragsbildner BB aus den Flußkomponenten $\psi_{\beta c}$, $\psi_{\beta b}$, $\psi_{\beta a}$ gebildeten Größe $|\psi_\beta|$ kann so z.B. verhindert werden, daß bei niedrigen Ständerfrequenzen die wahre Bahnkurve des Flußraumzeigers innerhalb eines Sechstels der Periode stärker als tolerierbar von der durch den gemeinsamen Anfangspunkt führenden idealen Bahngeraden abweicht. Es ist zweckmäßig, diese dritte Regelung nur in den Zeitabschnitten eines Pulsspiels wirken zu lassen, in denen sich das Moment bei niedrigen Wellendrehzahlen nur vergleichsweise langsam ändert.

In Fig. 5 ist ein Beispiel für eine Signalverarbeitungsstruktur dargestellt, die dies ermöglicht. Es ist zusätzlich eine Vergleichsstelle 17 vorgesehen, der die Größen $|\psi_\beta|$ und $\psi_{soll}$ vorliegen und die die Regelabweichung $\Delta\psi = \psi_{soll} - |\psi_\beta|$ an einen Flußvergleicher V3 abgibt. Dem Vergleicher V3 liegt der Toleranzwert $\varepsilon_\psi$ eingangsseitig an. Ausgangsseitig gibt der Vergleicher V3 die Schaltvariable $S\psi$ an eine flußabängige Umschalteinrichtung $\psi u$ ab.

Wenn das Ausgangssignal $|\psi_\beta|$ des Betragsbildners BB den Sollwert $\psi_{soll}$ um mehr als den zugelassenen Toleranzwert $\varepsilon\psi$ unterschreitet, werden über den zugeordneten Vergleicher V3, ausgelöst vom Signal $S\psi$, von der Umschalteinrichtung $\psi u$ mit Schalter SU2 anstelle des Schaltsignals $S_N$ die um 120° verschobenen Schaltsignale $S_a'$, $S_b'$, $S_c'$ an die Umschalteinrichtung MU mit Schalter SU1 weitergegeben. Ist such diese Umschalteinrichtung über ihren Vergleicher V2 aktiviert, gilt jetzt $S_a = S_b'$; $S_b = S_c'$; $S_c = S_a'$, d.h. die Maschine erhält einen Wert des Spannungsraumzeigers, der gegenüber dem Wert, der im ersten Teilintervall des Pulsspiels wirksam war, einen nacheilenden Winkellagenunterschied von 120° aufweist.

Anstelle anzuhalten, bewegt sich infolgedessen der Flußraumzeiger mit voller Geschwindigkeit in eine Richtung, die gegenüber der der Soll-Bahngeraden um etwa 120° geändert ist. Auf der neuen Bahn vergrößert sich der Betrag der aktuellen $\psi_\beta$ ...-Komponente sehr schnell. Sollte währenddessen das Moment seinen Sollwert um mehr als $\varepsilon_M$ unterschreiten, wird über die Umschalteinrichtung MU der Vorgang sofort abgebrochen, d.h. die Momentregelung hat Vorrang. Sonst wird die Vergrößerung des Flußbetrages erst über die Umschalteinrichtung $\psi u$ beendet, wenn die Größe $|\psi_\beta|$ den Ursprungsabstand $\psi_{soll}$ erreicht. Auf diese Weise wird auch bei beliebig niedriger Ständerfrequenz die wahre Bahnkurve des Flußraumzeigers ständig sehr dicht an der Soll-Bahngeraden gehalten. Der Flußbetrag ändert sich nur geringfügig in dem Maße, wie es die Sechseckform der Flußbahnkurve bedingt.

Der Betrag der aktuellen $\psi_\beta$ ...-Komponente kann nicht nur mit Hilfe eines Spannungsraumzeigerwertes vergrößert werden, der gegenüber dem durch die Flußselbststeuerung ausgewählten Wert um 120° nacheilt, sondern dies geschieht auch bei dem um nur 60° nacheilenden Spannungsraumzeigerwert. Der gewünschte Effekt kan also bei jeweils zwei verschiedenen Schaltzuständen des Wechselrichters erreicht werden. Durch entsprechende Auswahlkriterien lassen sich, wie bei der Nullzustandsauswahl, zusätzliche Nebenbedingungen berücksichtigen.

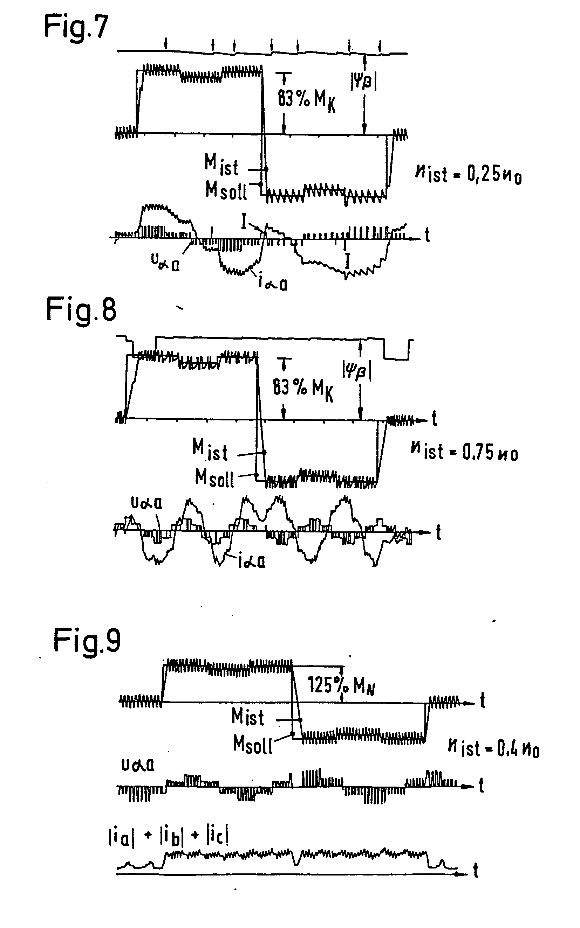

In den Fig. 7, 8 und 9 sind die Zeitverläufe wichtiger Größen bei schnellen Momentänderungen einer Kurzschlußläufermaschine dargestellt. Die Pulsfrequenz $f_p$ beträgt dabei jeweils $3 \times 300$ Hz und der Frequenz-Nennwert $f_o$ beträgt 60 bzw. 50 Hz. In den Fig. 7 und 8 sind jeweils die Flußkurve $|\psi_\beta|$, die Verläufe des Drehmoment-Sollwertes $M_{soll}$, des Drehmoment-Istwertes $M_{ist}$, der Sternspannung $U_{aa}$ und des Leiterstroms $i_{aa}$ dargestellt.

In Fig. 7 wird der Drehmoment-Sollwert $M_{soll}$ zwischen dem Wert 83% $M_K$ und 75% $M_K$ ($M_K$ = Kippmoment) verändert. Der Drehzahl-Istwert $n_{ist}$ beträgt 0,25 $n_0$ ($n_0$ = Grunddrehzahl). Durch Pfeile an der Flußkurve $|\psi_\beta|$ sind die kurzen Zeitintervalle gekennzeichnet, in denen auf die beschriebene Weise die Größe $|\psi_\beta|$ bei niedrigen Ständerfrequenzen durch eine Zweipunktregelung auf ihren Sollwert erhöht wird. An den nicht gekennzeichneten übrigen Stellen mit steilem Anstieg der Größe $|\psi_\beta|$ geschieht dies durch die beschriebene Flußselbstregelung. An den mit I gekennzeichneten Stellen der Spannungskurve wird zur geforderten schnellen Verkleinerung des Drehmomentes der Rotationssinn des Drehfeldes gegenüber dem Ständer kurzzeitig umgekehrt.

In Fig. 8 wird der Drehmoment-Sollwert $M_{soll}$ ebenfalls zwischen den Werten 83% $M_K$ und 75% $M_K$ verändert. Der Drehzahl-Istwert $n_{ist}$ beträgt jedoch 0,75 $n_0$. Es ist zu erkennen, daß bei geforderten schnellen Vergrößerungen des Drehmoments $M_{soll}$ der Fluß $|\psi_\beta|$ dynamisch erheblich verringert wird. Nur auf diese Weise können bei Drehzahlen $n_{ist}$, die merklich oberhalb der halben Grunddrehzahl $n_0$ liegen, große positive Werte des Rotorschlupfes erreicht werden.

In Fig. 9 sind die zeitlichen Verläufe des Drehmoment-Sollwertes $M_{soll}$, des Drehmoment-Istwertes $M_{ist}$, der Sternspannung $U_{aa}$ und der Summe der drei Umrichterströme $|i_a|+|i_b|+|i_c|$ dargestellt. Der Drehmoment-Sollwert $M_{soll}$ wird zwischen den Werten 112,5% $M_N$ und 125% $M_N$ ($M_N$ = Nennmoment) verändert. Der Drehzahl-Istwert $n_{ist}$ beträgt 0,4 $n_0$. Die Stromsummenkurve läßt erkennen, wie durch die direkte Regelung von Fluß und Drehmoment automatisch erreicht wird, daß auch bei dynamischen Vorgängen die Spitzenwerte der drei Umrichterströme $|i_a|+|i_b|+|i_c|$ nicht größer werden als in vergleichbaren stationären Betriebspunkten.

## Patentansprüche

1. Verfahren zur Regelung einer Drehfeldmaschine (IM), die über einen Wechselrichter (WR) mit eingeprägter Eingangs-Gleichspannung (U—) gespeist wird, mit folgenden Schritten:

   a) Bilden eines Fluß-Istwertes aus den gemessenen Ständerströmen und Ständerspannungen,

   b) Vergleich des Fluß-Istwertes mit einem Fluß-Sollwert ($\psi$ soll),

   c) Bilden eines ersten Steuervektors (Sa', Sb', Sc') mit einer der Pulszahl des Wechselrichters entsprechenden Anzahl von diskreten Lagen, die zyklisch durchlaufen werden,

   d) Weiterschalten des ersten Steuervektors (Sa', Sb', Sc') auf die nächste diskrete Lage, wenn der Fluß-Istwert den Fluß-Sollwert ($\psi$ soll) übersteigt,

dadurch gekennzeichnet, daß als Fluß-Istwert die Komponente des Ist-Flußraumzeigers ($\psi\alpha a$, $\psi\beta a$) senkrecht zur Richtung derjenigen diskreten Lage, die als nächtes vom ersten Steuervektor (Sa', Sb', Sc') eingenommen werden soll, verwendet wird, wobei zur Signalverarbeitung keine Informationen über die Wellendrehzahl und den Rotorwiderstand notwendig sind.

2. Verfahren nach Anspruch 1, dadurch gekennzeichnet, daß der Wechselrichter (WR) durch einem Drehmomentregler (V2) zwischen dem ersten Steuervektor (Sa', Sb', Sc') und einem Spannungszustand Null entsprechenden zweiten Steuervektor (SN) im Sinne einer Zweipunktregelung hin- und hergeschaltet wird.

3. Verfahren nach Anspruch 1, dadurch gekennzeichnung, daß bei kleinen Drehzahlen durch den Drehmomentregler (V2) zwischen dem ersten Steuervektor (Sa', Sb', Sc') und einem hierzu inversen Steuervektor hin- und hergeschaltet wird.

4. Einrichtung zur Durchführung des Verfahrens nach Anspruch 1, mit einem ersten Vergleicher (V1) als Flußregler, der eingangsseitig den aus den gemessenen Ständerströmen und Ständerspannungen gebildeten Fluß-Istwert und den Fluß-Sollwert ($\psi$ soll) empfängt und ausgangsseitig Schaltzustandsvariable, die dem ersten Steuervektor (Sa', Sb', Sc') entsprechen, zur Ansteuerung des Wechselrichters (WR) abgibt, dadurch gekennzeichnet, daß der Fluß-Istwert komponentenweise mittels eines Integrators (I) und eines Komponentenwandlers (KW) gebildet und mit dem Fluß-Sollwert ($\psi$ soll) verglichen wird, wobei zur Signalverarbeitung keine Informationen über die Wellendrehzahl und den Rotorwiderstand notwendig sind.

5. Einrichtung nach Anspruch 4, dadurch gekennzeichnet, daß ein Signalumschalter (SU) zwischen erstem Vergleicher (V1) und Wechselrichter (WR) vorgesehen ist, dessen erster Schalter (SU1) zwischen den vom Flußregler (V1) vorgegebenen Schaltzustandsvariablen ($S_a'$, $S_b'$, $S_c'$) und einem Schaltzustand Null ($S_N$), der dem zweiten Steuervektor entspricht, hin- und herschaltet.

6. Einrichtung nach Anspruch 5, dadurch gekennzeichnet, daß der erste Schalter (SU1) des Signalumschalters (SU) über eine momentabhängige Umschalteinrichtung (MU) vom Drehmomentregler (V2) angesteuert wird.

7. Einrichtung nach Anspruch 6, dadurch gekennzeichnet, daß ein zweiter Vergleicher (V2) als Drehmomentregler vorgesehen ist, der die Drehmoment-Regelabweichung ($-\Delta M$) mit einem vorgegebenen ersten Drehmoment-Toleranzwert ($\varepsilon_M$) vergleicht.

8. Einrichtung nach Anspruch 7, dadurch gekennzeichnet, daß ein Momentrechner (MR) zur Bildung des inneren Drehmomentes ($M_i$) aus den Ständerstromkomponenten ($i_a$, $i_a$) und Flußkomponenten ($\psi\beta a$, $\psi\alpha a$) und eine Vergleichsstelle (16), der das innere Drehmoment ($M_i$) und eine vorgegebenes Drehmoment ($M_{soll}$) zur Bildung der Drehmoment-Regelabweichung ($-\Delta M$) zugeführt wird, vorgesehen ist.

9. Einrichtung nach Anspruch 5, dadurch gekennzeichnet, daß der Signalumschalter (SU) einen zweiten Schalter (SU2) aufweist, der zwischen dem Schaltzustand Null ($S_N$) und den vom Flußregler (V1) vorgegebenen und einen nacheilenden Winkellagenunterschied von 120° aufweisenden Schaltzustandsvariablen hin- und herschaltet.

10. Einrichtung nach Anspruch 9, dadurch gekennzeichnet, daß der zweite Schalter (SU2) des Signalumschalters (SU) über eine flußabhängige Umschalteinrichtung ($\psi U$) angesteuert wird.

11. Einrichtung nach Anspruch 10, dadurch gekennzeichnet, daß ein Betragsbildner (BB) den Betrag ($|\psi\beta|$) der Amplituden der Flußkomponenten ($\psi\beta a$, $\psi\beta b$, $\psi\beta c$) bildet, dieser mit dem Ständerfluß-Sollwert ($\psi_{soll}$) verglichen wird, die Flußregelabweichung ($\Delta\psi$) einem dritten Vergleicher (V3) zugeführt wird, und der dritte Vergleicher die flußabhängige Umschalteinrichtung ($\psi U$) ansteuert, wenn die Fluß-Regelabweichung ($\Delta U$) einen vorgegebenen Fluß-Toleranzwert ($\varepsilon\psi$) überschreitet.

12. Einrichtung nach Anspruch 5, dadurch gekennzeichnet, daß der Signalumschalter (SU) einen dritten Schalter (SU3) aufweist, der zwischen dem Schaltzustand Null ($S_N$) und den vom Flußregler (V1) vorgegebenen, inversen Schaltzustandsvariablen hin- und herschaltet.

13. Einrichtung nach Anspruch 12, dadurch gekennzeichnet, daß ein Inverter (IV) zur Bildung der inversen Schaltzustandsvariablen vorgesehen ist.

14. Einrichtung nach Anspruch 12, dadurch gekennzeichnet, daß der dritte Schalter (SU3) des Signalumschalters (SU) über eine drehzahlabhängige Umschalteinrichtung (DU) angesteuert wird.

15. Einrichtung nach Anspruch 14, dadurch gekennzeichnet, daß die drehzahlabhängige Umschalteinrichtung (DU) von einem vierten Vergleicher (V4) angesteuert wird, der eingangsseitig einen Drehzahl-Istwert ($n_{ist}$) der Induktionsmaschine (IM) und einem minimalen Grenzwert empfängt.

16. Einrichtung nach Anspruch 7 und 14, dadurch gekennzeichnet, daß die drehzahlabhängige Umschalteinrichtung (DU) von einem fünften Vergleicher (V5) angesteuert wird, der eingangsseitig die Drehmoment-Regelabweichung ($-\Delta M$) und einen zweiten Drehmoment-Toleranzwert ($\varepsilon_M'$) empfängt, wobei der zweite Toleranzwert ($\varepsilon_M'$) größer als der erste Toleranzwert ($\varepsilon_M$) ist.

17. Einrichtung nach Anspruch 8 oder einem der folgenden, dadurch gekennzeichnet, daß der Ständerfluß-Sollwert ($\psi_{soll}$) mit Hilfe eines Reglers (PID) aus der Drehmoment-Regelabweichung ($-\Delta_M$) gebildet wird.

18. Einrichtung nach Anspruch 5 oder einem der folgenden, dadurch gekennzeichnet, daß eine Nullzustandsauswahl (NA) den Schaltzustand Null ($S_N$) in Abhängigkeit der vom Flußregler (V1) vorgegebenen Schaltzustandsvariablen bildet.

**Revendications**

1. Procédé de régulation d'une machine à champ tournant (IM) qui est alimentée par l'intermédiaire d'un onduleur (WR) avec une tension continue d'entrée ($U_-$) imposée, comprenant les étapes suivantes:

a) formation d'une valeur réelle de flux à partir des courants statoriques et des tensions statoriques mesurés,

b) comparaison de la valeur réelle de flux avec une valeur de consigne de flux ($\psi$ soll).

c) formation d'un premier vecteur de commande (Sa', Sb', Sc') avec une nombre de positions discrètes, parcourues de manière cyclique, qui correspond au nombre d'impulsions de l'onduleur,

d) commutation du premier vecteur de commande (Sa', Sb', Sc') à la position discrète suivante, lorsque la valeur réelle de flux dépasse la valeur de consigne de flux ($\psi$ soll),

caractérisé par le fait que l'on utilise en tant que valeur réele de flux la composante du vecteur de flux réel ($\psi_{\alpha a}$, $\psi_{\beta a}$) qui est perpendiculaire à la direction de la position discrète suivante devant être occupée par le premier vecteur de commande (Sa', Sb', Sc'), aucune information concernant la vitesse de rotation de l'arbre et la résistance du rotor étant nécessaire au traitement de signal.

2. Procédé selon la revendication 1, caractérisé par le fait que l'onduleur (WR) est commuté en va-et-vient, dans le sens d'une régulation à deux positions, par un régulateur de couple (V2) entre le premier vecteur de commande (Sa', Sb', Sc') et un deuxième vecteur de commande (SN) correspondant à un état de tension zéro.

3. Procédé selon la revendication 1, caractérisé par le fait qu'à des faibles vitesses de rotation, le régulateur de couple (V2) provoque la commutation en va-et-vient entre le premier vecteur de commande (Sa', Sb', Sc') et un vecteur de commande inversé par rapport au premier.

4. Dispositif pour la mise en oeuvre du procédé selon la revendication 1, comprenant un premier comparateur (V1) en tant que régulateur de flux, qui reçoit côte entrée la valeur réelle de flux, formée à partir des courants statoriques et tensions statoriques mesurés, et la valeur de consigne de flux ($\psi$ soll) et délivre côté sortie des variable d'état de commutation, correspondant au premier vecteur de commande (Sa', Sb', Sc'), en vue de la commande de l'onduleur (WR), caractérisé par le fait que la valeur réelle de flux est formée par composantes au moyens d'un intégrateur (I) et d'un convertisseur de composantes (KW) et est comparée avec la valeur de consigne de flux ($\psi$ soll), aucune information concernant la vitesse de rotation de l'arbre et la résistance du rotor étant nécessaire au traitement de signal.

5. Dispositif selon la revendication 4, caractérisé par le fait qu'il est prévu entre le premier comparateur (V1) et l'onduleur (WR) un commutateur de signal (SU) dont le premier interrupteur (SU1) commute en va-et-vient entre les variables (Sa', Sb', Sc') d'état de commutation, prédéterminées par le régulateur de flux (V1), et un état de commutation zéro ($S_N$) qui correspond au deuxième vecteur de commande.

6. Dipositif selon la revendication 5, caractérisé par le fait que le premier interrupteur (SU1) du commutateur de signal (SU) est commandé par le régulateur de couple (V2), par l'intermédiaire d'un système de commutation (MU) dépendant du couple.

7. Dispositif selon la revendication 6, caractérisé par le fait qu'un deuxième comparateur (V2) est prévu en tant que régulateur de couple, qui compare l'écart de régulation ($-\Delta M$) de couple avec une première valeur de tolérance ($\varepsilon_M$) déterminée de couple.

8. Dispositif selon la revendication 7, caractérisé par le fait qu'il est prévu un calculateur de couple (MR) pour former le couple intérieur ($M_I$) à partir des composantes de courant statorique ($i_{\beta a}$, $i_{\alpha a}$) et des composantes de flux ($\psi_{\beta a}$, $\psi_{\alpha a}$, et un point de comparaison (16) auquel sont amenés le couple intérieur ($M_I$) et un couple prédéterminé ($M_{soll}$), en vue de la formation de l'écart de régulation de couple ($-\Delta M$).

9. Dispositif selon la revendication 5, caractérisé par le fait que le commutateur de signal (SU) est muni d'un deuxième interrupteur (SU2) qui commute en va-et-vient entre l'état de commutation zéro ($S_N$) et les variables d'état de commutation qui sont prédéterminées par le régulateur de flux (V1) et présentent une différence de position angulaire décalée en arrière de 120°.

10. Dispositif selon la revendication 9, caractérisé par le fait que le deuxième interrupteur (SU2) du commutateur de signal (SU) est commandé par un système de commutation ($\psi$U) dépendant du flux.

11. Dispositif selon la revendication 10, caractérisé par le fait qu'un système de formation de valeur (BB) forme la valeur ($|\psi\beta|$) des amplitudes des composantes de flux ($\psi_{\beta a}$, $\psi_{\beta b}$, $\psi_{\beta c}$), celle-ci est comparée avec la valeur de consigne du flux statorique ($\psi_{soll}$), l'écart de régulation de flux ($\Delta\psi$) est envoyé à un troisième comparateur (V3), et ledit troisième comparateur commande le système de commutation ($\psi$U) dépendant du flux, lorsque l'écart de régulation de flux ($\Delta\psi$) dépasse une valeur de tolérance de flux ($\varepsilon\psi$) prédéterminée.

12. Dispositif selon la revendication 5, caractérisé par le fait que le commutateur de signal (SU) est muni d'un troisième interrupteur (SU3) qui commute en va-et-vient entre l'état de commutation zéro ($S_N$) et les variables d'état de commutation inverses, prédéterminées par le régulateur de flux (V1).

13. Dispositif selon la revendication 12, caractérisé par le fait qu'un inverseur (IV) est prévu pour former les variables d'état de commutation inverses.

14. Dispositif selon la revendication 12, caractérisé par le fait que le troisième interrupteur (SU3) du commutateur de signal (SU) est commandé par un système de commutation (DU) dépendant de la vitesse de rotation.

15. Dispositif selon la revendication 14, caractérisé par le fait que le système de commutation (DU) dépendant de la vitesse de rotation est commandé par un quatrième comparateur (V4) qui reçoit côté entrée une valeur réelle de vitesse de rotation ($n_{ist}$) de la machine à induction (IM) et une valeur limite minimale.

16. Dispositif selon revendication 7 et 14, caractérisé par le fait que le système de commutatin (DU) dépendant de la vitesse de rotation est commandé par un cinquième comparateur (V5) qui reçoit côté entrée l'écart de régulation de couple ($-\Delta M$) et une deuxième valeur de tolérance de couple ($\varepsilon_M'$), la deuxième valeur de tolérance ($\varepsilon_M'$) étant supérieure à la première valeur de tolérance ($\varepsilon_M$).

17. Dispositif selon la revendication 8 ou l'une des revendications suivantes, caractérisé par le fait que la valeur de consigne de flux statorique ($\psi_{soll}$) est formée à l'aide d'un régulateur (PID), à partir de l'écart de régulation de couple ($-\Delta M$).

18. Dipositif selon la revendication 5 ou l'une des revendications suivantes, caractérisé par le fait qu'un système de sélection d'état zéro (NA) établit l'état de commutation zéro ($S_N$) en fonction des variables d'état de commutation prédéterminées par le régulateur de flux (V1).

**Claims**

1. Method for controlling an induction machine (IM) which is fed with an impressed input direct voltage (U−) via an inverter (WR), comprising the following steps:

a) forming an actual flux value from the measured stator currents and stator voltages,

b) comparing the actual flux value with a nominal flux value ($\psi$nom),

c) forming a first control vector (Sa', Sb', Sc') with a number of discrete positions, corresponding to the number of pulses of the inverter, through which it cyclically passes,

d) stepping the first control vector (Sa', Sb', Sc') onto the next discrete position when the actual flux value exceeds the nominal flux value ($\psi$nom),

characterized in that the component of the actual flux space vector ($\psi_{\alpha a}$, $\psi_{\beta a}$) perpendicular to the direction of the discrete position which is to be assumed next by the first control vector (Sa', Sb', Sc') is used as actual flux value, no information on the shaft speed and the rotor resistance being required for the signal processing.

2. Method according to Claim 1, characterized in that the inverter (WR) is switched back and forth in the sense of a two-position control between the first control vector (Sa', Sb', Sc') and a second control vector (SN) corresponding to a voltage state of zero by a torque controller (V2).

3. Method according to Claim 1, characterized in that the torque controller (V2) switches back and forth between the first control vector (Sa', Sb', Sc') and a control vector inverse thereto at low speeds.

4. Device for carrying out the method according to Claim 1, comprising a first comparator (V1) as flux controller which receives at the input the actual flux value formed from the measured stator currents and stator voltages and the nominal flux value ($\psi$nom) and emits at the output switching state variables which correspond to the first control vector (Sa', Sb', Sc'), for driving the inverter (WR), characterized in that the actual flux value is formed component by component by means of an integrator (I) and a component converter (KW) and is compared with the nominal flux value ($\psi$nom), no information on the shaft speed and the rotor resistance being required for the signal processing.

5. Device according to Claim 4, characterized in that between the first comparator (V1) and inverter (WR) a signal change-over switch (SU) is provided, the first switch (SU1) of which switches back and forth between the switching state variables ($S_a'$, $S_b'$, $S_c'$) predetermined by the flux controller (V1) and a switching state of zero ($S_N$) which corresponds to the second control vector.

6. Device according to Claim 5, characterized in that the first switch (SU1) of the signal change-over switch (SU) is activated by the torque controller (V2) via a torque-dependent change-over device (MU).

7. Device according to Claim 6, characterized in that a second comparator (V2) is provided as torque controller which compares the torque control error ($-\Delta M$) with a predetermined first torque tolerance value ($\varepsilon_M$).

8. Device according to Claim 7, characterized in that a torque computer (MR) for forming the inner torque ($M_I$) from the stator current components ($i_a$, $i_a$) and flux components ($\psi_{\beta a}$, $\psi_{\alpha a}$) and a comparison point (16), which is supplied with the inner torque ($M_I$) and a predetermined torque ($M_{nom}$) for forming the torque control error ($-\Delta M$), is provided.

9. Device according to Claim 5, characterized in that the signal change-over switch (SU) exhibits a second switch (SU2) which switches back and forth between the switching state of zero ($S_N$) and the switching state variables predetermined by the flux controller (V1) and exhibiting a trailing angle position difference of 120°.

10. Device according to Claim 9, characterized in that the second switch (SU2) of the signal change-over switch (SU) is activated via a flux-dependent change-over device ($\psi$U).

11. Device according to Claim 10, characterized in that an amount forming circuit (BB) forms the amount ($|\psi\beta|$) of the amplitudes of the flux components ($\psi\beta a$, $\psi\beta b$, $\psi\beta c$), this amount is compared with the nominal stator flux value ($\psi_{nom}$), the flux control error ($\Delta\psi$) is supplied to the third comparator (V3) and the third comparator activates the flux-dependent change-over device ($\psi$U) when the flux control error ($\Delta U$) exceeds a predetermined flux tolerance value ($\varepsilon\psi$).

12. Device according to Claim 5, characterized in that the signal change-over switch (SU) exhibits a third switch (SU3) which switches back and forth between the switching state of zero ($S_N$) and the inverse switching state variables predetermined by the flux controller (V1).

13. Device according to Claim 12, characterized in that an inverter (IV) is provided for forming the inverse switching state variables.

14. Device according to Claim 12, characterized in that the third switch (SU3) of the signal change-over switch (SU) is activated via a speed-dependent change-over device (DU).

15. Device according to Claim 14, characterized in that the speed-dependent change-over device (DU) is activated by a fourth comparator (V4) which receives an actual speed value ($n_{act}$) of the induction machine (IM) and a minimum limit value at its output.

16. Device according to Claim 7 to 14, characterized in that the speed-dependent change-over device (DU) is activated by a fifth comparator (V5) which receives torque control error ($-\Delta M$) and a second torque tolerance value ($\varepsilon M'$) at its input, the second tolerance value ($\varepsilon_M'$) being greater than the first tolerance value ($\varepsilon_M$).

17. Device according to Claim 8 or one of the claims following, characterized in that the nominal stator flux value ($\psi_{nom}$) is formed from the torque control error ($-\Delta_M$) with the aid of a controller (PID).

18. Device according to Claim 5 or one of the claims following, characterized in that a zero state selection (NA) forms the switching state of zero ($S_N$) in dependence on the switching state variables predetermined by the flux controller (V1).

Fig.1

Fig.2

# Fig.3

# Fig.4

## Fig.5

## Fig.6

## Fig.7

$83\% M_K$

$|\Psi_\beta|$

$M_{ist}$

$M_{soll}$

$n_{ist} = 0{,}25\, n_0$

$U_{\alpha a}$

$i_{\alpha a}$

$I$

$t$

## Fig.8

$83\% M_K$

$|\Psi_\beta|$

$t$

$M_{ist}$

$M_{soll}$

$n_{ist} = 0{,}75\, n_0$

$U_{\alpha a}$

$i_{\alpha a}$

$t$

## Fig.9

$125\% M_N$

$t$

$M_{ist}$

$M_{soll}$

$n_{ist} = 0{,}4\, n_0$

$U_{\alpha a}$

$t$

$|i_a| + |i_b| + |i_c|$

$t$

4